# EUROPÄISCHE PATENTANMELDUNG

(11) **EP 3 219 209 A1**
(43) Veröffentlichungstag der Anmeldung: **20.09.2017**
(21) Anmeldenummer: 16161293.2
(22) Anmeldetag: 19.03.2016
(51) Int. Cl.: A23C 9/158, A23C 9/152, A23C 9/13

(54) **LAGERSTABILE MILCHZUBEREITUNG ENTHALTEND ASCORBINSÄURE**

(71) Anmelder: DMK Deutsches Milchkontor GmbH, 27404 Zeven (DE)
(72) Erfinder: Borcherding, Katja, 27404 Zeven (DE); Hoch, Matthias, 27404 Zeven (DE); Kappler, Anja, 27404 Zeven (DE)
(74) Vertreter: Fabry, Bernd

(57) **Zusammenfassung**

Vorgeschlagen wird eine Milchzubereitung, enthaltend
(a) etwa 0,001 bis 1.000 ppm oxidationslabile Zusatzstoffe und
(b) etwa 10 bis 10.000 ppm Ascorbinsäure und/oder Ascorbinsäuresalze.

## Beschreibung

### GEBIET DER ERFINDUNG

Die Erfindung befindet sich auf dem Gebiet des Molkereiwesens und betrifft Milchzubereitungen mit einem Gehalt an oxidationslabilen Inhaltsstoffen, deren Qualität und Lagerstabilität durch den Zusatz geeigneter Stabilisatoren deutlich verbessert wird, ein Verfahren zur Verbesserung der Qualität solcher Milchzubereitungen sowie die Verwendung der neuen Stabilisatoren.

### STAND DER TECHNIK

Schlägt man in den üblichen Übersichtswerken den Begriff "Milch" nach, erfährt man, dass es sich "um eine weiße, trübe Emulsion bzw. kolloidale Dispersion von Proteinen, Milchzucker und Milchfett in Wasser handelt, die in den Milchdrüsen der Säugetiere gebildet wird." So richtig diese Definition aus chemischer oder biologischer Sicht auch ist, wird sie dem Geschehen am Markt doch längst nicht gerecht. Neben der natürlichen Vollmilch finden sich in den Regalen der Supermärkte nicht nur Legionen von unterschiedlichen Produkten, die letztendlich alle aus Milch gewonnen werden, selbst das Produkt "Milch" als solches ist enorm diversifiziert, um Verbraucherwünschen gerecht zu werden oder auch neue Trends zu bedienen.

Zu den wichtigsten Milchzubereitungen gehören solche, die durch spezielle Verfahren besonders haltbar gemacht werden. Hierzu zählt insbesondere die so genannte "UHT-Milch", eine in der Regel Milch, die durch kurzzeitige Erhitzung auf sehr hohe Temperaturen von Keimen befreit und in sterile Weichpackungen abgefüllt wird.

Ein weiterer Trend geht in die Richtung, Milch mit weiteren Inhaltsstoffen zu versetzen oder schon darin enthaltene Stoffe anzureichern, um ein multifunktionales Lebensmittel zur Verfügung zu stellen. Dabei können die Inhaltsstoffe unterschiedlicher nicht sein, angefangen von Calcium für den Knochenbau über Vitamine, zur Verbesserung und zur ausreichenden Versorgung des Metabolismus, bis hin zu mehrfach ungesättigten Fettsäuren, die koronaren Schädigungen entgegen wirken sollen.

Nachteilig ist indes, dass sich insbesondere wie oben erläutert additivierte Milchzubereitungen als nicht lager- und qualitätsstabil erweisen. Durch die im Kopfraum der Verpackungen und im Produkt noch vorhandenen Sauerstoffmengen kann es im Laufe der Lagerung, insbesondere bei zusätzlicher Temperaturbelastung einerseits zu einem oxidativen Abbau der Inhaltsstoffe und zum anderen zu einer nachteiligen Veränderung des Geschmacks kommen, wobei der oxidative Abbau die Geschmacksänderung zur Folge haben kann, aber nicht notwendigerweise muss. Temperaturbelastungen sind u.a. durch ungekühlten Transport verursacht. Ein typisches Beispiel stellt Export-UHT-Milch dar, die mit Vitamin D3 versetzt ist: Abhängig von der Temperatur erniedrigt sich der Vitamingehalt auf praktisch die Hälfte und der ursprüngliche frische Geschmack ist so stark vermindert, das er vom Verbraucher nicht mehr akzeptiert wird.

Die Aufgabe der vorliegenden Erfindung hat daher darin bestanden, Milchzubereitungen, insbesondere solche, die für längere Lagerung und höheren Lagerungstemperaturen vorgesehen sind, zur Verfügung zu stellen, die einerseits zwar oxidationslabile Inhaltsstoffe enthalten, jedoch hinsichtlich Lagerstabilität und geschmacklicher Qualität ausreichend stabilisiert und geschützt sind.

### BESCHREIBUNG DER ERFINDUNG

Ein erster Gegenstand der Erfindung betrifft daher eine Milchzubereitung, enthaltend
(a) etwa 0,001 bis 1000 ppm, vorzugsweise etwa 0,01 bis 500 ppm und insbesondere etwa 0,01 bis 100 ppm oxidationslabile Inhaltsstoff und
(b) etwa 10 bis 10000 ppm, vorzugsweise etwa 20 bis 5000 ppm und insbesondere etwa 20 bis 1000 Ascorbinsäure und/oder Ascorbinsäuresalze und/oder Ascorbinsäurederivate.

Überraschendweise wurde gefunden, dass der Zusatz von Vitamin C, also Ascorbinsäure, Ascorbinsäuresalzen oder Derivate, speziell Alkalisalzen der Ascorbinsäure und darunter wieder speziell Natriumascorbat, in der Lage ist, sowohl die Oxidation unterschiedlichster oxidationslabiler Inhaltsstoffe in der Milchzubereitung beinahe völlig zu unterbinden, als auch gleichzeitig den Frischeeindruck über lange Lagerzeiten und selbst bei Temperaturbelastung zu bewahren.

### MILCHZUBEREITUNGEN

Klassische Milchzubereitungen weisen sehr geringe Mengen an darin gelöstem Sauerstoff auf; die Gehalte liegen in der Regel deutlich unter 10 ppm. Anders sieht es aus, wenn Milch in sterile Kartonverpackungen abgefüllt wird, die noch über ein Kopfraum verfügen, das mit Luft gefüllt ist. Da diese Produkte für längere Lagerung bestimmt sind, wandert der Sauerstoff allmählich in das Produkt und führt zu Oxidationsreaktionen, die die Zusammensetzung und den Geschmack beeinflussen können. Die vorliegende Erfindung ist daher vornehmlich auf Milchzubereitungen gerichtet, die zu Anfang einen Restsauerstoffgehalt von größer oder gleich 1 ppm und insbesondere größer 10 ppm im Produkt sowie ein Restsauerstoffgehalt im Kopfraum von größer oder gleich 1 Vol.-%, insbesondere 1 bis 22 Vol.-% und insbesondere 5 bis 15 Vol.-% aufweisen.

Bei den Milchzubereitungen kann es sich um Vollmilch, fettarme Milch oder Magermilch handeln. Vorzugsweise besitzen die Produkte einen Fettgehalt im Bereich von etwa 1 bis etwa 4 Gew.-%. Besonders bevorzugt ist die so genannte UHT-Milch, also eine Milch, die durch Ultrahocherhitzung besonders lagerbeständig gemacht worden ist.

### OXIDATIONSLABILE ZUSATZSTOFFE

Wie eingangs erläutert, besteht ein nachhaltiges Marktinteresse an funktionalisierten Milchprodukten, bei denen vorhandene wertvolle Inhaltsstoffe angereichert oder denen milchfremde Zusatzstoffe zugemischt werden, die die Komponente (a) bilden. Neben Spurenelementen kommen für diesen Zweck insbesondere Vitamine und mehrfach ungesättigte Fettsäuren (so genannte "omega-Fettsäuren") in Betracht, die infolge ihrer chemischen Struktur, durch die Gegenwart von Doppelbindungen anfällig gegen Oxidationen sind.

Die erste Gruppe der oxidationslabilen Inhaltsstoffe umfasst daher ganz allgemein Vitamine. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure)
- Vitamin D (Cholecalciferol), Ergocalciferol
- Vitamin E (Tocopherole, Tocotrienole) und
- Vitamin K (Phyllolchinon, Menachinon).

Neben Tocopherol stelt Vitamin D und insbesondere das Cholecalciferol (auch Colecalciferol oder kurz Calciol; Vitamin D₃) das bevorzugte Vitamin dar (Struktur I). Es handelt sich um die wichtigste physiologische Form des Vitamin D in allen nichtpflanzlichen Eukaryoten und so auch im Menschen. Cholecalciferol ist ein Secosteroid und wird im Körper auch mit Hilfe von UVB-Strahlung in der Haut aus 7-Dehydrocholesterol gebildet, daher ist der historische Begriff Vitamin der Definition nach nicht völlig zutreffend.

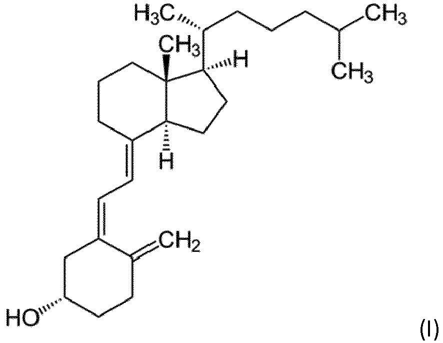

In der Nahrung kommt es vor allem in Fettfischen vor oder wird den Lebensmitteln als Nahrungsergänzungsmittel zugefügt. Es hat im Körper die Funktion eines Prohormons und wird über eine Zwischenstufe zu dem Hormon Calcitriol umgewandelt.

Eine zweite Gruppe oxidationslabiler Zusatzstoffe umfasst die mehrfach ungesättigten Fettsäuren. Ein gemeinsames Kriterium dieser Stoffe besteht darin, dass sie über einen hinreichend langen Lipidrest und eine ausreichende Zahl von Doppelbindungen verfügen. Für diesen Zweck eignen sich daher insbesondere solche Fettsäuren die 18 bis 26 Kohlenstoffatome und 2 bis 6 Doppelbindungen aufweisen.

In einer ersten Ausführungsform der Erfindung werden für diesen Zweck konjugierte Linolsäure (CLA), deren Ester-speziell solche mit niederen aliphatischen Alkoholen mit 1 bis 4 Kohlenstoffatomen - oder deren Glyceride, speziell die synthetischen Triglyceride eingesetzt. Dabei handelt es sich um bekannte Stoffe, die üblicherweise durch basenkatalysierte Isomerisierung von Distelöl oder entsprechenden Alkylestern und nachfolgende enzymatische Hydrolyse hergestellt werden. Es hat sich dabei als vorteilhaft erwiesen, wenn die CLA bzw. CLA-Derivate eine bestimmte Spezifikation erfüllen, gemäß der der Acylrest wenigstens 30 Gew.-% t10,c12-Isomere, wenigstens 30 Gew.-% c9,t11-Isomere und in Summe weniger als 1 Gew.-% 8,10-, 11,13- und t,t-Isomere aufweist. Entsprechende Produkte sind beispielsweise unter der Bezeichnung Tonalin^{®} CLA-80 (Cognis) im Handel.

In einer zweiten alternativen Ausführungsform kommen als Komponente (a) auch sogenannte omega-3-Fettsäuren in Frage, die typisch 18 bis 26 und insbesondere 20 bis 22 Kohlenstoffatome enthalten und dabei wenigstens 4, bis hin zu 6 Doppelbindungen aufweisen. Auch solche Stoffe sind nach üblichen Methoden der organischen Chemie erhältlich, beispielsweise durch Umesterung von Fischöl, Harnstofffällung der erhaltenen Alkylester und nachfolgende Extraktion mit unpolaren Lösemitteln, wie beschrieben in der deutschen Patentschrift DE 3926658 C2 (Norsk Hydro). Auf diese Weise werden Fettsäuregemische erhalten, die reich an omega-3 (all-Z)-5,8,11,14,17-eicosapentansäure (EPA) C 20 : 5 und (all-Z)-4,7,10,13,16,19-Docosahexansäure (DHA) C 22 : 6. sind. Solche Produkte sind beispielsweise unter der Bezeichnung Omacor^{®} (Pronova) im Handel. Die physiologisch aktiven Fettsäuren werden vorzugsweise in Form ihrer Glyceride eingesetzt.

### ASCORBINSÄURE

Als Stabilisator, der die Komponente (b) bildet, wird im Sinne der vorliegenden Erfindung Ascorbinsäure oder deren physiologisch zulässigen Salze, speziell die Alkalisalze eingesetzt; besonders bevorzugt ist der Einsatz von Natriumascorbat. Ascorbinsäure ist auch als Vitamin C bekannt, somit besteht hier eine gewisse Überlappung mit den Stoffen der Gruppe (a). Die Anwesenheit von Ascorbinsäure ist jedoch auch dann im Kontext der vorliegenden Erfindung sinnvoll, wenn keine weiteren oxidationslabilen Zusatzstoffe vorhanden sind, da der Stabilisatior nicht nur die Aufgabe erfüllt, die Oxidation von anderen Vitaminen oder ungesättigten Fettsäuren und damit deren chemischen Abbau zu verhindern, sondern auch gleichzeitig den Frischeeindruck der Milch aufrechtzuerhalten.

### CALCIUM

Üblicherweise enthält Milch eine natürlichen Calciumgehalt von etwa 120 mg. Da lösliche Calciumsalze für die Knochenbildung wichtig sind und Osteoporose entgegenwirken, umfasst eine weitere Ausführungsform der vorliegenden Erfindung auch solche Milchprodukte, die als weitere optionale Komponente (c) zusätzliche Mengen an Calcium enthalten, beispielsweise in Mengen von etwa 0,01 bis etwa 0,1 Gew.-% in Form unlöslicher oder löslicher Salze.

### HYDROKOLLOIDE

In einer weiteren Ausführungsform der vorliegenden Erfindung können die Milchzubereitungen als Co-Stabilisatoren, die die optionale Gruppe (d) bilden, Hydrokolloide, speziell anionische Hydrokolloide enthalten. Die Hydrokolloide sind pyhsiologisch unbedenklich und erhöhen die Viskosität der Milchzubereitungen. Die Viskositätserhöhung verlangsamt das Absinken von unlöslichen Inhaltsstoffen z. B. Calcium und erhöht dadurch die Stabilität des Produktes.

Die bevorzugten Hydrokolloide sind die vom Carrageen-Typ. Carrageen (englisch Carrageenan) ist die Sammelbezeichnung einer Gruppe langkettiger Kohlenhydrate, die in Rotalgenzellen vorkommen.

Es handelt sich um lineare, anionische Hydrokolloide, die sich nach chemischer Struktur unterscheiden lassen und unterschiedliche Eigenschaften aufweisen. Diese verschiedenen Typen unterscheiden sich durch den Anteil an Galactose und 3,6-Anhydrogalactose sowie über die Anzahl an Sulfatgruppen. Von kommerzieller Bedeutung sind κ-, 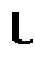 - und λ-Carrageen.

Zur Herstellung von Carrageen aus Rotalgen werden die Algen gewaschen und in alkalischer Lösung gekocht. Dieser Prozess kann bis zu 48 Stunden dauern, da dadurch noch gewisse Vorstufen des Carrageens (µ- und v-Carrageen) in κ- und 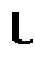 -Carrageen umgewandelt werden und so die funktionelle Wirkung verstärken. Dann wird die Lösung filtriert, um die restlichen Algenbestandteile zu entfernen. Zur Gewinnung des Carrageens aus der Lösung wird das Carrageen entweder mittels Alkohol ausgefällt oder mittels Kaliumchlorid geliert und dann abgepresst. Das gewonnene Carrageen wird anschließend getrocknet und vermahlen. Als Algenquellen finden vor allem *Chondrus-, Eucheuma-* und Gigartinaspezies Verwendung. Ein Großteil der Algen wird mittlerweile in Algenfarmen auf den Philippinen gewonnen, hier finden vor allem die Arten *Eucheuma spinosum* und *Eucheuma cottonii* Verwendung, da aus diesen Arten besonders reine Carrageentypen gewonnen werden können.

Auch wenn hauptsächlich κ-, 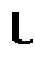 - und λ-Carrageen von kommerziellem Interesse sind, kommen in den Algen auch andere Typen vor. Zwei Typen sind µ- und v-Carrageen, die Vorstufen zu κ- und -Carrageen sind und bei der Extraktion in diese umgewandelt werden. Der Anteil der Carrageentypen im fertigen Carrageen ist von der verwendeten Algenart und von dem Herstellungsprozess abhängig. Bei kommerziellen Carrageenen handelt es sich nie um reine einzelne Typen.

κ-Carrageen geliert mit Kaliumionen zu einem festen und spröden und mit Calcium-Ionen zu einem festen, elastischen und synäresearmen Gel. Es ist nur als Natriumsalz in kaltem Wasser löslich. Als Calcium- oder Kaliumsalz werden deutlich höhere Temperaturen benötigt, um das Carrageen vollständig zu lösen. Bei der Abkühlung geht das Carrageen von der Knäuelform in eine Helixstruktur über. Bei weiterer Abkühlung kommt es unter Wechselwirkung mit den Calcium- oder Kaliumionen zur Zusammenlagerung der Helices und dadurch zur Ausbildung eines Netzwerkes.

κ-Carrageen besitzt zudem eine hohe Milchreaktivität. Aus diesem Grund reichen bereits geringe Mengen Carrageen aus, um Schokoladen- / Kakaogetränke zu stabilisieren und einen Absatz der Kakaopartikel zu verhindern. Diese Milchreaktivität ist auf Wechselwirkungen des negativ geladenen Hydrokolloids mit bestimmten Teilen des Casein zurückzuführen. Unterhalb des isoelektrischen Punktes des Proteins verändert sich dessen Ladung, und das Carrageen wird von dem Protein ausgefällt. Aus diesem Grund finden sich so gut wie keine sauren Milchprodukte, die mit Carrageen stabilisiert sind. Neben den Wechselwirkungen mit Milchprotein zeigt κ-Carrageen Synergien mit Tara Gum, Johannisbrotkernmehl und Konjac Gum. Dabei kommt es im Allgemeinen zu einer Verstärkung der Gelstruktur und zu Schmelz- und Gelpunkten, die zu höheren Temperaturen verschoben sind.

-Carrageen geliert mit Calcium und wird vielfach für Dressings oder weichere Gele eingesetzt. Auch -Carrageen ist nur als Natriumsalz kaltlöslich und benötigt als Calcium- oder Kaliumform ebenfalls höhere Temperaturen. Bei der Abkühlung der heißen Carrageenlösung kommt es (ähnlich wie beim κ-Carrageen) zur Helixbildung, wobei diese Helices über Calciumbrücken ein Netzwerk ausbilden.

λ-Carrageen ist gut löslich. Dieses Carrageen wird vielfach im Bereich der Instantprodukte eingesetzt, bei denen keine Erhitzung stattfinden soll. λ-Carrageen bildet keine Helixstrukturen beim Abkühlen aus.

Die Hydrokolloide werden üblicherweise in Mengen von etwa 0,01 bis etwa 1 Gew.-%, vorzugsweise etwa 0,05 bis etwa 0,5 Gew.-% und insbesondere etwa 0,1 bis 0,25 Gew.-% eingesetzt.

### ZUBEREITUNGEN

In Summe werden im Sinne einer bevorzugten Ausführungsform solche Milchzubereitungen beansprucht, die
(a) etwa 0,001 bis 1.000 ppm, vorzugsweise etwa 0,01 bis 500 ppm und insbesondere etwa 0,01 bis 100 ppm oxidationslabile Inhaltsstoffe und
(b) etwa 10 bis 10.000 ppm, vorzugsweise etwa 20 bis 5.000 ppm und insbesondere etwa 20 bis 1.000 ppm Ascorbinsäure und/oder Ascorbinsäuresalze und/oder Ascorbinsäurederivate
sowie gegebenenfalls
(c) etwa 0,01 bis etwa 0,1 Gew.-% Calcium, und/oder
(d) etwa 0,001 bis etwa 1 Gew.-%, vorzugsweise etwa 0,001 bis etwa 0,05 Gew.-% und insbesondere etwa 0,01 bis 0,04 Gew.-% Hydrokolloide
enthalten, wobei sich alle Mengenangaben auf die Milchzubereitung als solche beziehen.

### VERFAHREN

Ein weiterer Gegenstand der Erfindung betrifft ein Verfahren zur Qualitätsverbesserung von additivierten Milchzubereitungen, umfassend die folgenden Schritte:
(i) Bereitstellen einer Milchzubereitung, enthaltend mindestens einen oxidationslabilen Inhaltsstoff;
(ii) Versetzen der Milchzubereitung mit Ascorbinsäure bzw. einem Ascorbinsäuresalz;
(iii) gegebenenfalls Versetzen der Milchzubereitung mit einem Hydrokolloid; sowie
(iv) UHT-Erhitzen; und
(iv) Abfüllen der Milchzubereitung in eine Verpackung.

### GEWERBLICHE ANWENDBARKEIT

Weitere Gegenstände der Erfindung betreffen die Verwendung von Ascorbinsäure bzw. Ascorbinsäuresalze bzw. Ascorbinsäurederivate zur Verbesserung von Lagerstabilität und Geschmack von Milchzubereitungen, die einen Gehalt an oxidationsempfindlichen Inhaltsstoffen aufweisen, wobei die bevorzugten Ausführungsformen, speziell Einsatzmengen denen entsprechen, die bereits oben erwähnt worden sind. Insofern erübrigt sich eine Wiederholung.

### VERGLEICHSBEISPIEL 1

Standardmilch mit einem Fettgehalt von 1,5 Gew.-% wurde durch Zugabe von Vitamin D auf einen Gehalt von 0,03 Gew.-% und durch Zugabe von Calciumsalzen auf einen Calciumgehalt von 0,150 Gew.-% angereichert, einer Standard-UHT-Behandlung unterworfen und dann steril in 200 ml Weichpackungen abgefüllt. Der Restsauerstoffgehalt in der Milch betrug etwa 6 ppm. Das Kopfraumvolumen in der Packung betrug 7 ml, der Sauerstoffgehalt in diesem Volumen bei 20 bis 22 Vol.-%.

### BEISPIELE 1 BIS 6

Eine Standardmilch gemäß Vergleichsbeispiel V1 wurde vor der UHT-Behandlung zusätzlich mit 50 ppm, 150 ppm und 250 ppm Natriumascorbat sowie gegebenenfalls k-Carrageen versetzt und wie oben geschildert abgefüllt und verpackt.

Die unterschiedlichen Milchzubereitungen wurden einmal bei Raumtemperatur (25°C) und einmal bei 40°C über einen Zeitraum von 4 Monaten gelagert. Im Abstand von jeweils einem Monat wurde eine Verpackung geöffnet und sowohl der Gehalt an Vitamin D bestimmt (Ausgangswert = 100 % Standard) als auch der Geschmack des Produktes durch eine Gruppe von 5 geübten Testern gemäß folgender Skala beurteilt: (+++) = frisch, unverändert gegenüber Ausgangsgeschmack, (++) = frisch, aber mit leicht veralteter Unternote; (+) veraltet, stumpf; (#) = nicht mehr für den Verkauf akzeptabel. Die Ergebnisse sind in den folgenden **Tabellen 1 und 2** zusammengefasst; die Beispiele 1 bis 6 sind erfindungsgemäß, Beispiel V1 dient zum Vergleich.

**Tabelle 1**

| Stabilität von UHT-Milch | | | | |
|---|---|---|---|---|
| **Zusatzstoffe** | **V1** | **1** | **2** | **3** |
| Natriumascorbat | - | 50 | 150 | 250 |

| ***Lagertest (25 °C)*** | | | | |
|---|---|---|---|---|
| - nach 1 Monat | 90 | 90 | 93 | 96 |
| - nach 2 Monaten | 85 | 88 | 92 | 96 |
| - nach 3 Monaten | 80 | 86 | 91 | 96 |
| - nach 4 Monaten | 75 | 81 | 86 | 94 |

| ***Lagertest 40°C*** | | | | |
|---|---|---|---|---|
| - nach 1 Monat | 80 | 88 | 91 | 95 |
| - nach 2 Monaten | 72 | 87 | 90 | 93 |
| - nach 3 Monaten | 20 | 74 | 90 | 93 |
| - nach 4 Monaten | 20 | 70 | 88 | 89 |

Die Beispiele zeigen, dass durch Zugabe von Ascorbinsäure ein Abbau des Vitamin D3 beinahe völlig verhindert werden konnte, während ohne Zusatz die Abbaumenge bei 40°C Lagerungstemperatur bei rund 80 % lag.

**Tabelle 2**

| Verkostung von UHT-Milch | | | | |
|---|---|---|---|---|
| **Zusatzstoffe** | **V1** | **5** | **6** | **7** |
| **Natriumascorbat** | - | 50 | 150 | 250 |

| ***Lagertest (20°C)*** | | | | |
|---|---|---|---|---|
| - nach 1 Monat | +++ | +++ | +++ | +++ |
| - nach 2 Monaten | ++ | ++ | +++ | +++ |
| - nach 3 Monaten | ++ | ++ | +++ | +++ |
| - nach 4 Monaten | + | ++ | ++ | ++ |

| ***Lagertest 28°C*** | | | | |
|---|---|---|---|---|
| - nach 1 Monat | ++ | ++ | ++ | +++ |
| - nach 2 Monaten | ++ | ++ | ++ | +++ |
| - nach 3 Monaten | + | ++ | ++ | ++ |
| - nach 4 Monaten | # | + | ++ | ++ |

Die Beispiele zeigen, dass durch Zugabe von Ascorbinsäure der frische Geschmack, wie sie die UHT-Milch unmittelbar nach der Herstellung zeigte, praktisch über die gesamte Lagerzeit gehalten wird.

### VERGLEICHSBEISPIEL 2

Standardmilch mit einem Fettgehalt von 3,5 Gew.-% wurde mit 20 ppm EPA und 60 ppm DHA angereichert und einer Standard-UHT-Behandlung unterworfen und dann steril in Weichpackungen abgefüllt. Der Restsauerstoffgehalt in der Milch betrug etwa 1 ppm. Das Kopfraumvolumen in der Packung betrug 7 ml, der Sauerstoffgehalt in diesem Volumen bei 18 Vol.-%.

### BEISPIELE 7 bis 9

Eine Standardmilch gemäß Vergleichsbeispiel V2 wurde nach der UHT-Behandlung zusätzlich mit 50, 150 und 250 ppm Natriumascorbat sowie gegebenenfalls k-Carrageen versetzt und wie oben geschildert abgefüllt und verpackt.

Die unterschiedlichen Milchzubereitungen wurden einmal bei Raumtemperatur (25°C) und einmal bei 40°C über einen Zeitraum von 4 Monaten gelagert. Im Abstand von jeweils einem Monat wurde eine Verpackung geöffnet und sowohl der Gehalt an Vitamin D bestimmt (Ausgangswert = 100 % Standard) als auch der Geschmack des Produktes durch eine Gruppe von 5 geübten Testern gemäß folgender Skala beurteilt: (+++) = frisch, unverändert gegenüber Ausgangsgeschmack, (++) = frisch, aber mit veralteter Unternote; (+) veraltet, dumpf; (#) = nicht mehr für den Verkauf akzeptabel. Die Ergebnisse sind in der folgenden **Tabelle 3** zusammengefasst; die Beispiele 7 bis 9 sind erfindungsgemäß, Beispiel V2 dient zum Vergleich.

**Tabelle 3**

| Verkostung von UHT-Milch | | | | |
|---|---|---|---|---|
| **Zusatzstoffe** | **V2** | **7** | **8** | **9** |
| Natriumascorbat | - | 50 | 150 | 250 |
| k-Carrageen | | - | - | - |

| ***Lagertest (25°C)*** | | | | |
|---|---|---|---|---|
| - nach 1 Monat | +++ | +++ | +++ | +++ |
| - nach 2 Monaten | ++ | +++ | +++ | +++ |
| - nach 3 Monaten | ++ | ++ | +++ | +++ |
| - nach 4 Monaten | + | ++ | +++ | +++ |

| ***Lagertest (40 °C)*** | | | | |
|---|---|---|---|---|
| - nach 1 Monat | ++ | +++ | ++ | +++ |
| - nach 2 Monaten | ++ | ++ | ++ | ++ |
| - nach 3 Monaten | + | ++ | ++ | ++ |
| - nach 4 Monaten | # | + | + | ++ |

Die Beispiele zeigen, dass durch Zugabe von Ascorbinsäure der frische Geschmack, wie sie die UHT-Milch unmittelbar nach der Herstellung zeigte, praktisch über die gesamte Lagerzeit gehalten wird.

## Patentansprüche

1. Milchzubereitung, enthaltend
(a) etwa 0,001 bis 1.000 ppm oxidationslabile Zusatzstoffe und
(b) etwa 10 bis 10.000 ppm Ascorbinsäure und/oder Ascorbinsäuresalze und/oder Ascorbinsäurederivate.

2. Milchzubereitung nach Anspruch 1, **dadurch gekennzeichnet, dass** sie einen Restsauerstoffgehalt größer oder gleich 1 ppm im Produkt und größer oder gleich 1 Vol.-% im Kopfraumvolumen aufweist.

3. Milchzubereitung nach den Ansprüchen 1 und/oder 2, **dadurch gekennzeichnet, dass** es sich um ultrahocherhitzte Vollmilch, Magermilch oder fettarme Milch handelt.

4. Milchzubereitung nach mindestens einem der Ansprüche 1 bis 3, **dadurch gekennzeichnet, dass** sie als Komponente (a) Vitamine und/oder mehrfach ungesättigte Fettsäuren enthält.

5. Milchzubereitung nach mindestens einem der Ansprüche 1 bis 4, **dadurch gekennzeichnet, dass** sie als Komponente (a) Vitamin D bzw. Vitamin D3 enthält.

6. Milchzubereitung nach mindestens einem der Ansprüche 1 bis 5, **dadurch gekennzeichnet, dass** sie weiterhin als Komponente (c) Calcium enthält.

7. Milchzubereitung nach Anspruch 6, **dadurch gekennzeichnet, dass** sie etwa 0,01 bis etwa 0,1 Gew.-% Calcium in Form löslicher und/oder unlöslicher Salze enthält.

8. Milchzubereitung nach mindestens einem der Ansprüche 1 bis 6, **dadurch gekennzeichnet, dass** sie weiterhin als Komponente (d) Hydrokolloide enthalten.

9. Milchzubereitung nach Anspruch 8, **dadurch gekennzeichnet, dass** sie Hydrokolloide vom Carrageen-Typ enthalten.

10. Milchzubereitung nach den Ansprüchen 8 und/oder 9, **dadurch gekennzeichnet, dass** sie etwa 0,01 bis etwa 1 Gew.-% Hydrokolloide enthält.

11. Milchzubereitung nach mindestens einem der Ansprüche 1 bis 10, **dadurch gekennzeichnet, dass** sie
(a) etwa 0,001 bis 1.000 ppm oxidationslabile Inhaltsstoffe und
(b) etwa 10 bis 10.000 ppm Ascorbinsäure und/oder Ascorbinsäuresalze und/oder Ascorbinsäurederivate.
sowie gegebenenfalls
(c) etwa 0,01 bis etwa 0,1 Gew.-% Calcium, und/oder
(d) etwa 0,001 bis etwa 1 Gew.-%, Hydrokolloide
enthält.

12. Verfahren zur Qualitätsverbesserung von additivierten Milchzubereitungen, umfassend die folgenden Schritte:
(i) Bereitstellen einer Milchzubereitung, enthaltend mindestens einen oxidationslabilen Inhaltsstoff;
(ii) Versetzen der Milchzubereitung mit Ascorbinsäure bzw. einem Ascorbinsäuresalz;
(iii) gegebenenfalls Versetzen der Milchzubereitung mit einem Hydrokolloid; sowie
(iv) UHT-Erhitzen; und
(iv) Abfüllen der Milchzubereitung in eine Verpackung.

13. Verwendung von Ascorbinsäure bzw. Ascorbinsäuresalze zur Verbesserung von Lagerstabilität und Geschmack von Milchzubereitungen, die einen Gehalt an oxidationsempfindlichen Zusatzstoffen aufweisen.
